Europäisches Patentamt

European Patent Office

Office européen des brevets

(11) Veröffentlichungsnummer: **0 159 625 B1**

# EUROPÄISCHE PATENTSCHRIFT

(12)

(45) Veröffentlichungstag der Patentschrift: 06.03.91    (51) Int. Cl.⁵: **B08B 9/08**

(21) Anmeldenummer: 85104404.0

(22) Anmeldetag: 12.04.85

(54) Vorrichtung zum Transport von Kästen oder dergl.

(30) Priorität: 12.04.84 DE 3413797
     20.06.84 DE 3422840
     22.10.84 DE 3438691

(43) Veröffentlichungstag der Anmeldung:
30.10.85 Patentblatt 85/44

(45) Bekanntmachung des Hinweises auf die
Patenterteilung:
06.03.91 Patentblatt 91/10

(84) Benannte Vertragsstaaten:
AT BE CH DE FR GB IT LI NL

(56) Entgegenhaltungen:
FR-A- 1 583 798
NL-A- 7 704 221
US-A- 3 783 560

(73) Patentinhaber: **Silberzahn, Helmut**
**Nüstenbacher Strasse 45**
**W-6950 Mosbach/Baden(DE)**

(72) Erfinder: **Silberzahn, Helmut**
**Nüstenbacher Strasse 45**
**W-6950 Mosbach/Baden(DE)**

(74) Vertreter: **Linser, Heinz et al**
**Patentanwälte Heinz Linser Dipl. Ing. Eck-**
**hardt Eyer Robert-Bosch-Strasse 12a Post-**
**fach 10 22 10**
**W-6072 Dreieich(DE)**

## Beschreibung

Die Erfindung betrifft eine Vorrichtung zum Transport von Behältern, Gefäßen, Kästen oder dergleichen, insbesondere Flaschenkästen, in Form eines mit einer Flüssigkeit gefüllten Kanalsystems.

Die Getränkeindustrie vertreibt ihre Getränke überwiegend in Flaschen und soweit hierzu Mehrwegflaschen verwendet werden, erfolgt der Transport in Getränkekästen, welche vorwiegend aus Kunststoff bestehen. Die mit leeren Flaschen an die Getränkefirmen zurückgelieferten Kästen werden in der Annahmestelle entleert und durchlaufen einen längeren Weg über eine Reinigungs- bzw. Waschstation zur Beladestation, in die die gewaschenen und gegebenenfalls erneut beschrifteten Flaschenkästen mit gefüllten Getränkeflaschen beladen werden. Je nach den örtlichen Verhältnissen durchlaufen die Flaschenkästen von der Annahme- bis zur Beladestation einen Weg, der mehrere hundert Meter betragen kann. Die hierfür verwendeten Transporteinrichtungen bestehen aus Förderketten, Förderbändern oder dergleichen. An Kurven, Bögen oder Abzweigungen ist ein erheblicher mechanischen Aufwand erforderlich und auf der Transportstrecke sind eine Vielzahl von Stütz- und Umlenkrollen notwendig, wobei jede Rolle ein eigenes hochwertiges Lager aufweist. Während des Transports der Kästen stoßen nicht nur diese gegeneinander und verursachen dabei einen erheblichen Lärm, sondern auch die Kettenglieder oder andere bewegte Elemente erzeugen während des Transports eine unerträgliche Lärmbelästigung, so daß die Bedienungspersonen mit einem Ohrenschutz ausgerüstet sind. Wegen der teilweise großen Entfernungen, welche die Transportvorrichtungen überbrücken müssen, werden an den verschiedenen Stellen synchron arbeitende Antriebe verwendet, wodurch die Anlagen auch erheblich verteuert werden.

Die TRansporteinrichtungen bedürfen auch einer ständigen Wartung, insbesonder Schmierung der Lager, Austausch verschleißter Ketten- oder Bänderteile und dergleichen.

Der Erfindung liegt die erste Aufgabe zugrunde, eine Transporteinrichtung vorzuschlagen, welche praktisch lärmfrei arbeitet, einen minimalen Verschleiß aufweist und praktisch kaum einer Wartung bedarf, wobei die benötigte Energie zum Antrieb des Fördermittels ebenfalls minimal ist und das Fördermittel von Aggregaten einer anderen Art verwendet werden kann, welche in der Getränkeindustrie bereits vorhanden sind.

Aus Umweltschutzgründen ist man bestrebt, die Verwendung von Mehrwegflaschen besonders zu fördern.

Der Vertrieb von Getränken der verschiedensten Art erfolgt mehr und mehr über Verbrauchermärkte und insbesondere über Getränke-Abholmärkte. Die Flaschenkästen sind in den meisten Fälllen von dem jeweiligen Getränkehersteller bzw. der Brauerei beschriftet und die in Getränkekästen befindlichen Getränkeflaschen werden in Paletten aufgestapelt, aus denen sich der Kunde bedient.

Um diese umweltfreundliche Entwicklung weiter zu unterstützen, werden zur Zeit Etiketten entwickelt, mit denen die Flaschenkästen zwei- oder vierseitig etikettiert werden können, ohne Rücksicht darauf, welche Beschriftung vorhanden war. Damit ist es nicht mehr erforderlich, die Firmenbezeichnungen auf die Kästen zu drucken oder einzuprägen. Die Etiketten können demgegenüber eine aktuelle Information und werbewirksame graphische Gestaltung in den vielfältigsten Farben aufweisen. Diese Technik wurde auch die Verwendung genormter Fläschenkästen erlauben, ohne daß es zu Verwechselungen führen würde, da die Etiketten das in den Kästen befindliche Produkt in aktueller und ausreichend großer Weise kennzeichnen würde.

Die zu verwendenden Etiketten sind gegen Kondens-, Schwitz- und Regenwasserzerstörung geschützt und sind andererseits in kaltem und heißem Wasser vollständig löslich, wobei jedoch wegen der verwendeten unterschiedlichen Materialien auch unterschiedliche Waschbedingungen vorliegen, welche mit Hilfe einer Waschmaschine, die im kontinuierlichen Durchgang arbeitet, zu lösen sind.

Sollen in relativ kurzer Zeit eine große Anzahl von Transportbehältern sorgfältig gewaschen werden, so sind hierfür nach herkömmlichen Methoden Waschstraßen einer Länge erforderlich, welche den in Getränkeabfüllstationen zur Verfügung stehenden Raum überschreiten. Außerdem sind für den An- und Abtransport der Kästen entsprechend lange Transport- und Fördereinrichtungen erforderlich, welche das Raumproblem noch kritischer gestalten.

Aus der NL-A-7704221 ist eine Vorrichtung bekannt, welche zum Transport und zur Konservierung von Früchten, vorzugsweise Tomaten und Paprikaschoten dient, welche in die Eingangsstation geschüttet werden. Der Transport des zu konservierenden Gutes erfolgt hierbei lediglich durch eine kurze, durch die Konservierungsstation verlaufende Strecke, wobei am Ausgang der Station ein Schaufel-Kettenförderer das Gut in eine weitere höher gelegene Station befördert. Die verwendete Flüssigkeit zur Behandlung des Gutes ersetzt somit keine Transporteinrichtung.

Aus der US-A-3 783 560, von welcher der Oberbegriff des Anspruchs 1 ausgeht, ist eine Waschvorrichtung für Gefäße bekannt, bei der die Gefäße durch ein Waschbecken geführt werden. Zur Reinigung wird das Waschwasser mittels besonderer Umührvorrichtungen durchgewirbelt und der Transport der Behälter durch das Waschbecken erfolgt durch die nachfolgenden Gefäße, welche von einer steilen Rutsche mittels Schwerkraft und eines angetriebenen Schaufelrades in das Waschbecken gleiten. Das Waschbecken weist hierbei auch nur eine geringe Längserstreckung auf, welche dem Waschvorgang genügt.

Der Erfindung liegt somit ferner die Aufgabe zugrunde, eine Vorrichtung zum Fördern und Waschen von Transportbehältern vorzuschlagen, welche neben der Waschleistung auch gleichzeitig den Transport der Kästen über längere und beliebig geformte Strecken von der Eingangsstation bis zur Befüllstation bzw. Einsatzstation der Flaschen in die Kästen durchführt, ohne daß besondere Transportmittel erforderlich sind, welche lärmfrei arbeitet, einen minimalen Verschleiß aufweist und kaum einer Wartung bedarf, wobei die benötigte Energie zum Antrieb des Fördermittels ebenfalls minimal ist.

Die Lösung dieser Aufgabe besteht gemäß der Erfindung darin, daß die Flüssigkeit gleichzeitig Waschmittel und Transportmittel ist und mittels einer Umwälzpumpe in einem geschlossenen, einen integrierten Flüssigkeits-Rückflußkanal aufweisenden Flüssigkeitskreislauf des Kanalsystems umwälzbar ist, wobei das Kanalsystem - im Querschnitt betrachtet - kreis- oder U-förmig ausgebildet ist und im Baukastensystem gerade-, links- und/oder rechtsgebogene Kanalabschnitte aufweist.

Mit Hilfe dieser Vorrichtung werden die Transportkästen nicht nur von der Anlieferungsstation bis zur entfernt liegenden Befüllstation transportiert, sondern auch gleichzeitig über die gesamte Transportzeit eingeweicht und gewaschen.

Das Baukastensystem nach der Erfindung ermöglicht eine Anpassung an alle vorgegebenen Raumbedingungen, da die Vorrichtung in beliebigen Bahnkurven in offener oder geschlossener Bauweise ausgebildet werden kann.

Der mit dem Kanalsystem integrierte Flüssigkeits-Rückflußkanal ist gemäß der Erfindung außerhalb und/oder innerhalb des Kanalsystems angeordnet. Dabei kann der Rückflußkanal beispielsweise direkt in dem Kanalsystem untergebracht sein oder kann auch als Rückflußrohr unter oder neben dem Kanal befestigt sein. Hierdurch wird die Bauweise im Baukastensystem erheblich vereinfacht und für das Rückflußrohr entsteht praktisch kein zusätzlicher Raumbedarf.

In einer vorteilhaften Weiterentwicklung der Erfindung ist der Flüssigkeits-Rückflußkanal in mehrere Kanäle unterteilt, so daß sich hierfür der vorhandene Raum günstig ausnutzen läßt.

Zur Verbesserung der Waschleistung ist es erforderlich, die Temperatur des Waschmittels auf 40°C bis 50°C zu steigern und zu halten. Hierzu weisen die Wand- und Rohrelemente der Kanalabschnitte an ihren Außenseiten eine thermische Isolierung auf.

Zur weiteren Verbesserung können die Kanäle auch vollständig geschlossen sein, so daß nur eine geringe Wärme entweicht und der Geräuschpegel erheblich verringert wird.

Zur weiteren Platz- und Materialeinsparung können auch mehrere Kanalsysteme miteinander integriert und nebeneinander angeordnet sein.

In dem zylinderförmig ausgebildeten Kanalsystem sind in Weiterbildung der Erfindung austauschbare, verstell- und justierbare Strömungsleit- und -Führungsbleche angeordnet, um die Strömungsgeschwindigkeit zu regulieren und die Wirbelbildung zu verhindern oder zu vermindern.

Vorteilhaft weist mindestens ein Kanalabschnitt in den Kanalwandungen Sprühdüsen auf, so daß der Wascheffekt den Erfordernissen angepaßt werden kann.

Das Kanalsystem besteht in einer Ausführungsform der Erfindung aus glasfaserverstärktem Kunststoff, so daß Geräusche gedämpft werden und die Vorrichtung besonders wartungsarm ausgebildet ist.

Die Behältereingangsstation weist eine zum Boden des ersten Kanalabschnittes führende, mit Öffnungen ausgerüstete Rutsche auf, welche auf ihrer Unterseite von der Flüssigkeit in Transportrichtung anströmbar ist. Hierdurch erfolgt bereits ein großer Spüleffekt, der eine gute Anfangsreinigung bewirkt.

Die Behälterausgangsstation weist vorteilhaft eine in eine Wasch- und/oder Nachspülstation führende Rutsche auf, welche mit räumlich verteilten Düsen ausgerüstet ist, wobei unter der Boden- bzw. Behälterführungsfläche ein Schmutzaustrageband mit Filtervorrichtung vorhanden ist.

Als Eingangsstation zum Kanalsystem ist eine mehrstufige Behälter-oder Kastenwendevorrichtung angeordnet. Hierdurch wird eine automatische und vollständige Entleerung des Kastens von eingeklemmten Abfällen bewirkt, so daß die Anlage auch vollautomatisch arbeiten kann.

Die Erfindung wird anhand der Zeichnungen, in denen mehrere Ausführungsbeispiele dargestellt sind, näher beschrieben. Hierbei zeigen:

| FIGUR 1 | die Vorrichtung nach der Erfindung im unterbrochenen Längsschnitt; |
| FIGUR 2 | die Vorrichtung nach Figur 1 in Draufsicht; |
| FIGUR 3a | einen Querschnitt durch einen Kanalabschnitt mit Untergestell; |
| FIGUREN 3b und 3c | vergrößerte Ausschnitte aus der Figur 3a; |
| FIGUR 4 a-d | gebogene Kanalabschnitte in verkleinerter Darstellung; |

| FIGUR 5 | drei miteinander verbundene und nebeneinander angeordnete Kanalabschnitte. |
| FIGUR 6 | eine Draufsicht auf einen Bahnverlauf der Vorrichtung. |
| FIGUR 7 | die Vorrichtung nach der Erfindung im Querschnitt; |
| FIGUR 8 | eine weitere Ausführungsform der Erfindung im Querschnitt; |
| FIGUR 9 | eine Wendevorrichtung nach der Erfindung in Seitenansicht; |
| FIGUR 10 | die Vorrichtung nach Figur 9 in Draufsicht, und |
| FIGUR 11 | die Vorrichtung nach Figur 9 im Querschnitt. |

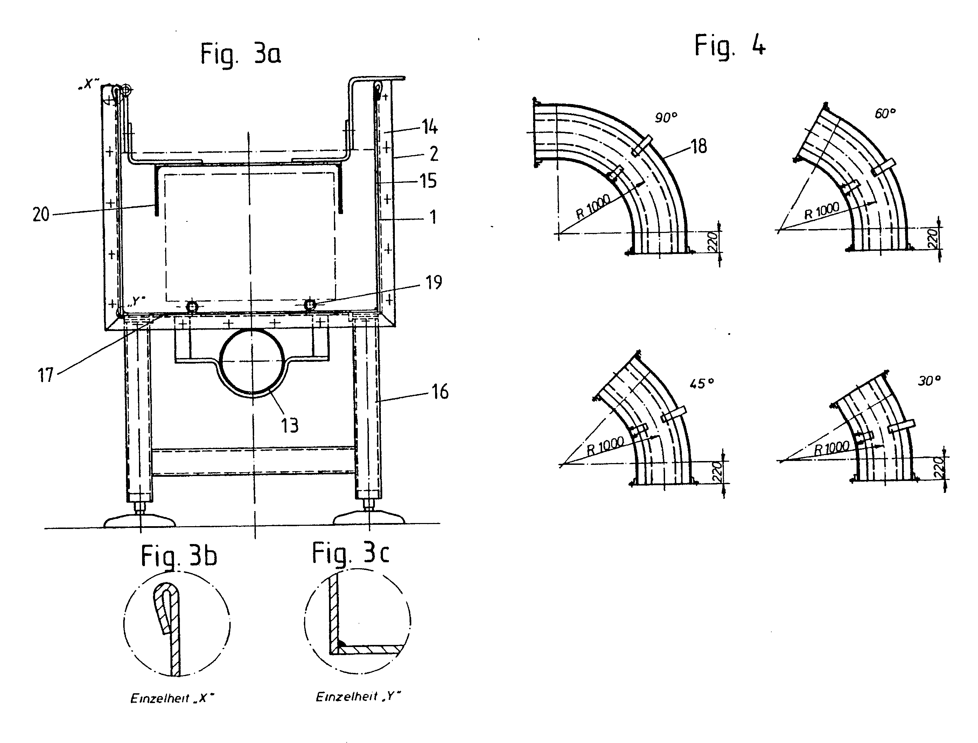

Die Figur 1 zeigt die Transportvorrichtung im Querschnitt und in einer unterbrochenen Darstellung und die Figur 2 zeigt diese in Draufsicht; der folgende Beschreibungteil bezieht sich daher auf beide Figuren.

Die Transportvorrichtung besteht aus einem U-förmigen Kanal 1, der in bestimmten Abschniiten aus einem allseitig geschlossenen Kanal 2 gebildet sein kann und der von einer Flüssigkeit als Transportmittel im geschlossenen Kreislauf durchströmt wird. Der Kanal weist dabei eine Eingangs-, eine Ausgangs- und eine Nachspül-Station auf und ist im Baukastensystem mit geraden und gebogenen Kanalabschnitten ausgeführt.

Das Einlaufbecken 3 der Eingangsstation 4 ist mit einer Einlaufbodenführung oder einer Einlaufrutsche 5 ausgerüstet. Darüber befindet sich in einem Abstand, der geringfügig größer, als die Höhe eines Transportbehälters ist, eine Einlaufdeckelführung , welche die Aufgabe hat, eventuell noch im Behälter befindliche Flaschen bei einem nicht vollständig entleerten Kasten nieder zu halten.

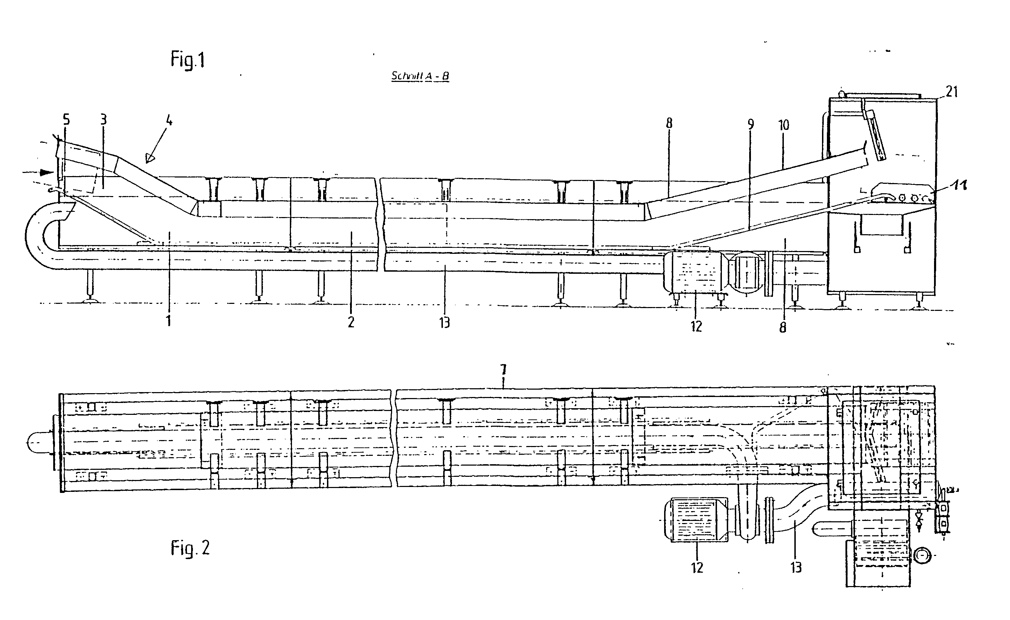

Der Transportkanal 7 kann aus geraden Systemteilen mit den Abmessungen 1 bis 3 m oder auch in Kombination mit Kurvenstücken, wie sie in den Figuren 4 a-d dargestellt sind, hergestellt werden.

Das sich anschließende Auslaufbecken 8 ist mit einer schräg nach oben verlaufenden Auslaufbodenführung oder Rutsche 9 ausgerüstet, welche in ähnlicher Weise wie die Eingangsstation mit einer Auslaufdeckelführung 10 versehen ist.

Die Rutsche 9 führt zu einer Nachspülstation 11, welche später genauer beschrieben wird, welche jedoch auch entfallen kann, wenn lediglich der Transport des zu transportierenden Gutes gewünscht wird.

Eine Flüssigkeitspumpe 12 dient zur Umwälzung des Transportmittels. Als Transportmittel kann beispielsweise das Spülwasser von Flaschenreinigungsmaschinen verwendet werden, welches noch eine ausreichende Wärme enthält, um gleichzeitig als aktives Einweich- und Lösungsmittel zu dienen. Dem Tranportmittel können auch Spülmittel zugegeben werden, so daß neben dem Transport auch eine Reinigung des Kästen als eine vorteilhafte Nebenleistung erzielt wird. Die Flüssigkeit wird in dem dargestellten Ausführungsbeispiel durch die Rohre 13 zurückgeführt. Bei einer nicht näher dargestellten Ausführungsform der Erfindung befindet sich in dem U-förmigen Kanal eine Trennwand, welche den Rückführungskanal für die Flüssigkeit bildet.

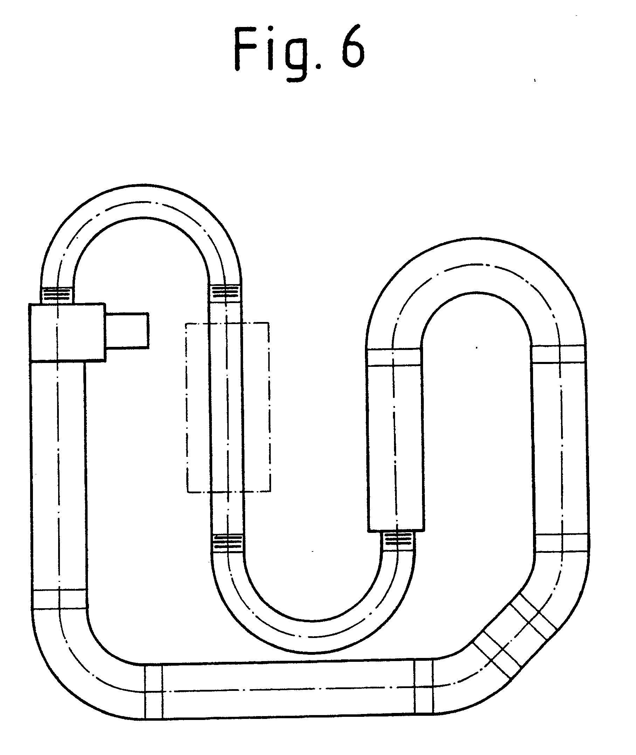

Die einzelnen im Baukastensystem aufgebauten Kanalabschnitte weisen an ihrem Umfang Flanschelemente 14 mit Dichtungen entlang dem Kanalumfang auf, wie anhand der Figur 3a zu entnehmen ist. Die Vorrichtung läßt sich daher in einfacher Weise aufbauen und den örtlichen Gegebenheiten anpassen, wie später anhand der Figur 6 beschrieben wird.

Die Kanalwände 15 eines Kanalabschnittes sind mit einem U-förmigen Gestell 16 verbunden, welches auf einem Untergestell angeordnet ist. Unter dem Bodenteil 17 eines Kanalabschnittes ist entsprechend der Kanalabschnittlänge ein mit Verbindungselementen versehener Flüssigkeits-Rückfluß-Rohrabschnitt 13 angeordnet.

Der Kanalabschnitt 18 weist eine Kanalabdeckung auf, welche als ein zu öffnender Deckel ausgebildet ist. Für den Transport der Flaschenkästen ist der Kanalabschnitt 18 in seinem Innern und auf seinem Boden mit Behälter-Laufschienen 19 und an seinem oberen Teil mit Behälterführungsschienen 20 versehen.

In den meisten praktischen Fällen ist es jedoch ausreichend Laufschienen 19 vorzusehen. Die Flüssigkeit erhält unter dem Boden des zu transportierenden Kastens und zwischen den Laufschienen eine entsprechende Geschwindigkeit, so daß der Kasten mitgerissen und im Bodenbereich gespült wird.

Die Figuren 3b und 3c zeigen Einzelheiten der Ausgestaltung der Kanalwände, an ihrem oberen Abschluß (Figur 3b) und an den Verbindungsstücken (Figur 3c).

Wie aus der Figur 4 ersichtlich ist, sind Kanalabschnitte des Baukastensystems vorgesehen, welche zusammen mit ihrem Flüssigkeits-Rückfluß-Rohr, oder in nicht dargestellter Form als Rückflußkanal, als Links- und Rechtskurvenstücke mit einem Kreisbogen von 30°, 45°, 60° und 90° ausgebildet sind.

Um bei der Verwendung von erwärmtem Brauchwasser eine zu schnelle Abkühlung zu verhindern, könn die Wand- und/oder Rohrelemente der Kanalabschnitte an ihren Außenseiten eine nicht näher dargestellte thermische Isolierung aufweisen.

Die Eingangsstation 4 (s. hierzu Figur 1 und 2) weist eine zum Boden des ersten Kanalabschnittes führende, mit Öffnungen ausgerüstete Rutsche 9 auf, welche auf ihrer Unterseite von der Transportflüssigkeit in Transportrichtung angeströmt wird. Entsprechend ausgebildete Strömungsleitbleche sorgen für eine Beruhigung der Strömung und durch venturi-düsenförmig ausgebildete Bleche erhält das Strömungsmittel eine ausreichende Beschleunigung und Geschwindigkeit, um den Transport der Kästen zu bewirken.

Auch die Behälter-Ausgangsstation 21 weist eine in eine Nachspülstation 11 führende Rutsche 9 auf, welche mit räumlich verteilten Düsen ausgerüstet ist, wobei unter der Boden- bzw. Behälterführungsfläche ein an sich bekanntes Schmutzaustrageband mit Filtervorrichtung vorhanden sein kann, falls die Vorrichtung nicht nur als Transportvorrichtung sondern auch als Wasch- oder Einweichanlage verwendet werden soll.

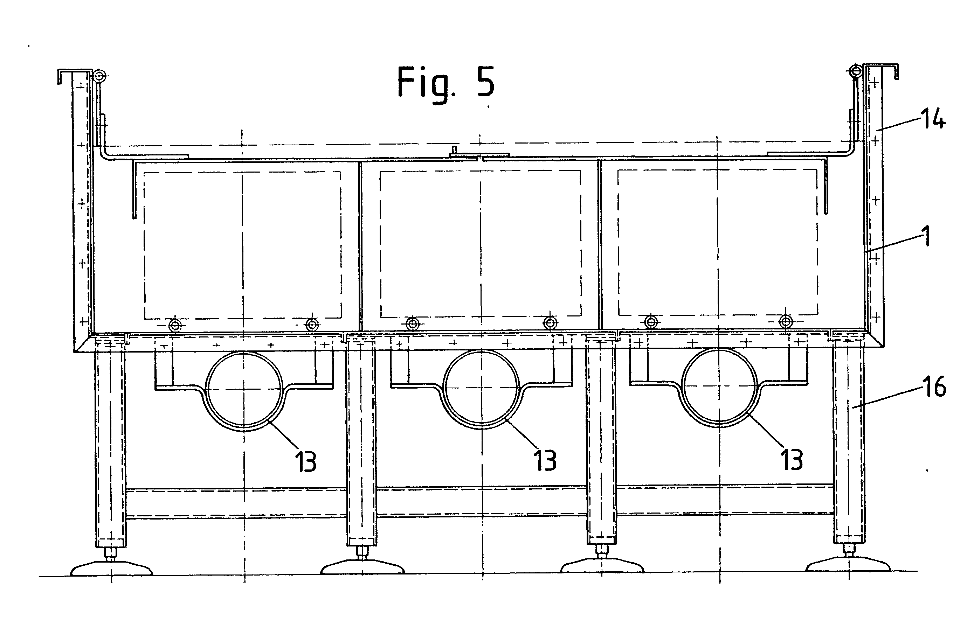

Die Figur 5 zeigt eine Ausführung, bei der mehrer Kanäle nebeneinander geschaltet sind. Bei einer solchen Kombination ist es auch möglich, den mittleren Kanal oder irgend einen andern der Kombination als Rückflußkanal zu verwenden.

Die Figur 6 zeigt eine Ausführungsform einer Transporteinrichtung, bei der alle möglichen Kurvenstücke zur Anwendung kommen. In dem geschlossenen Kreislauf ist noch ein Kastenwender eingeschaltet.

In dem U-förmig ausgebildeten Kanalsystem sind ferner austauschbare, verstell- und justierbare Strömungsleit- und -Führungsbleche angeordnet, um die Strömungsgeschwindigkeit zu regulieren und die Wirbelbildung zu verhindern oder zu vermindern.

Die in dem U-förmig ausgebildeten Kanalsystem angeordneten Strömungsleit-und -Führungsbleche sind, wie schon oben ausgeführt wurde, venturi-düsenförmig ausgebildet.

Die in dem U-förmig ausgebildeten Kanalsystem angeordneten Strömungsleit-und -Führungsbleche sind ferner als Fallstufe oder Fallstufen ausgebildet, so daß dadurch weitere Strömungseffekte erzielt werden können, falls dies wegen bestimmter örtlicher Verhältnisse erforderlich sein sollte. So kann es notwwendig sein, die Strömungsgeschwindigkeit des Transportmittels zu verlangsamen oder die Spülwirkung und Verwirbelung zur Erzielung einer erhöhten Waschwirkung zu erhöhen.

Hierfür kann es auch nützlich sein, mindestens einen Kanalabschnitt in den Kanalwandungen mit Sprühdüsen zu versehen.

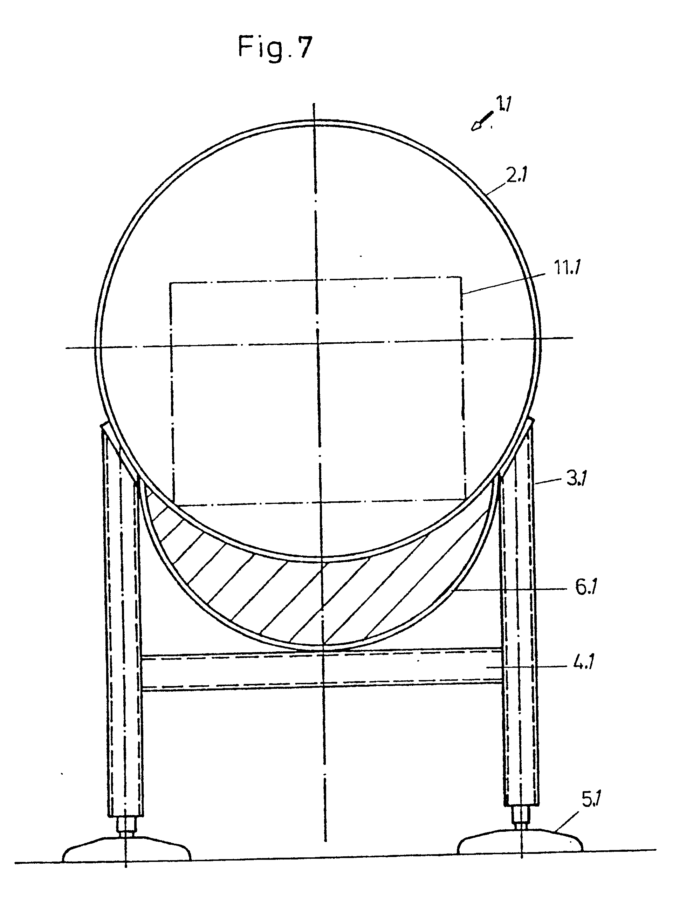

Die Figur 7 zeigt die Transportvorrichtung 1.1 im Querschnitt. Diese besteht aus einem zylinderförmigen Kanal 2.1, der in bestimmten Abschnitten aus einem allseitig geschlossenen Rohr gebildet ist, welches von einer Flüssigkeit als Transportmittel im geschlossenen Kreislauf durchströmt wird.

Der Kanal 2.1 kann ebenfalls aus geraden Systemteilen mit den Nennweiten von 500 oder 650 mm bestehen und es lassen sich selbstverständlich auch je nach Bedarf andere Abmessungen herstellen.

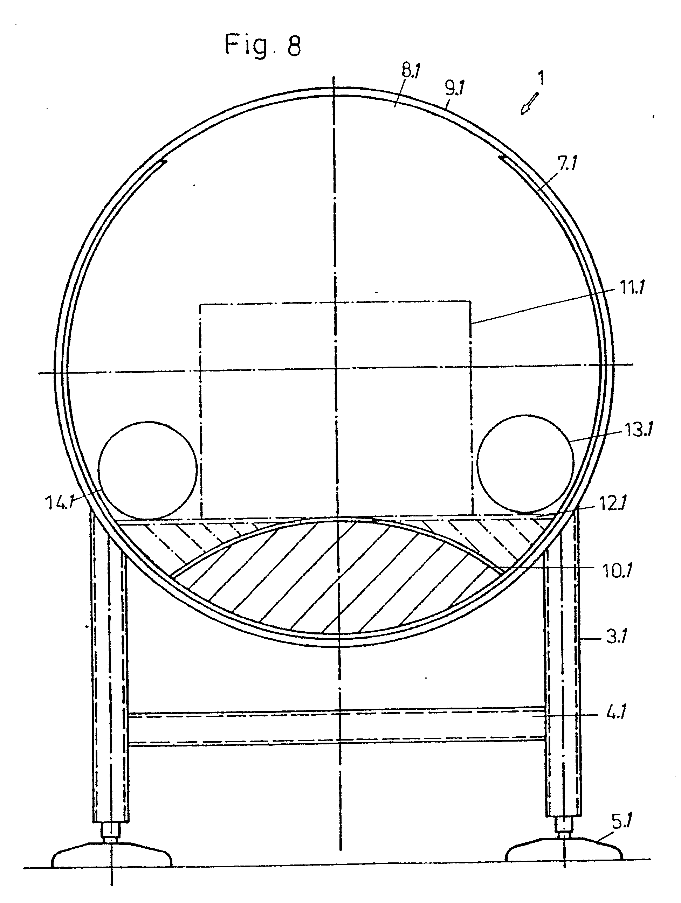

Der Kanal 2.1 ist mit einem U-förmigen Gestell 3.1 verbunden, welches mit einer Querstrebe 4.1 und verstellbaren Füßen 5.1 versehen ist. Der Flüssigkeitsrückflußkanal 6.1 ist mit dem Kanal 2.1 integriert und ist in dem in Figur 8 dargestellten Ausführungsbeispiel als Teilrohr, beispielsweise als Halbrohr ausgebildet und unter dem Kanal 2.1 angeordnet.

Die Figur 8 zeigt eine weitere Ausführungsform der Erfindung. Hierbei ist das Rohr 7.1 im oberen Teil 8.1 geöffnet, wobei in bestimmten Abständen das Rohr 7.1 vollständig umfassende Halteringe 9.1 vorgesehen sind. Der mit dem Kanal oder Rohr 7.1 integrierte Flüssigkeitsrückführungskanal 10.1 ist innerhalb des Rohres 7.1 angeordnet, wobei ein Teil der Wandung von dem Rohr 7.1 gebildet wird. Für den Transport der Flaschenkästen 11.1 ist das Rohr 7.1 in seinem Innern mit Behälter-Laufschienen 12.1 versehen.

Die Figur 8 zeigt als eine weitere Variante oder Kombination ein Flüssigkeitsrückführungssystem in Form von Röhren 13.1 und 14.1, welche sich innerhalb des Kanals oder Rohres 7.1 befinden. Diese Rohre 13.1, und 14.1 können hierbei gleichzeitig als Führungs- und Leitschienen für die Kästen 11.1 verwendet werden. Auch bei dieser Ausführungsform sind die Kanalabschnitte als Baukastensystem ausgebildet, welche zusammen mit ihren Flüssigkeitsrückflußröhren in nicht dargestellter Form als Links- und Rechtskurvenstücke mit einem Kreisbogen von 30°, 45°, 60° und 90° versehen sind.

In dem zylinderförmig ausgebildeten Kanalsystem sind ferner austauschbare, verstell- und justierbare Strömungsleit- und -Führungsbleche angeordnet, um die Strömungsgeschwindigkeit zu regulieren und die Wirbelbildung zu verhindern oder zu vermindern.

Die Wand- und Rohrelemente der Kanalabschnitte weisen an ihren Außenseiten eine nicht näher dargestellte thermische Isolierung auf, so daß der Wärmehaushalt in günstiger Weise gestaltet werden kann.

In ebenfalls nicht näher dargestellter Weise können mehrere kombinierte Vorrichtungen nebeneinander angeordnet und miteinander verbunden werden.

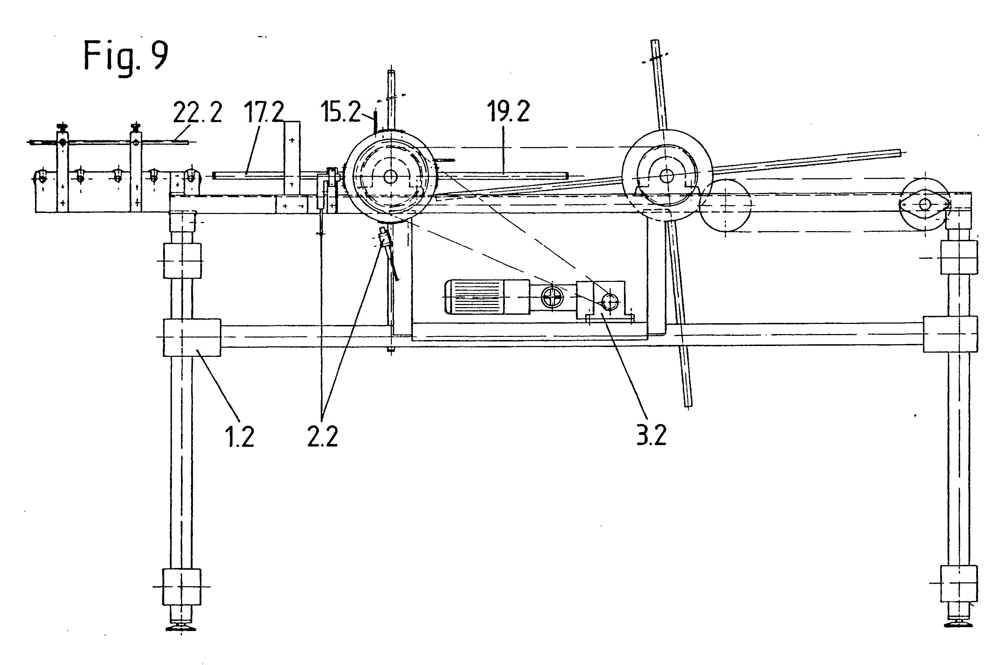

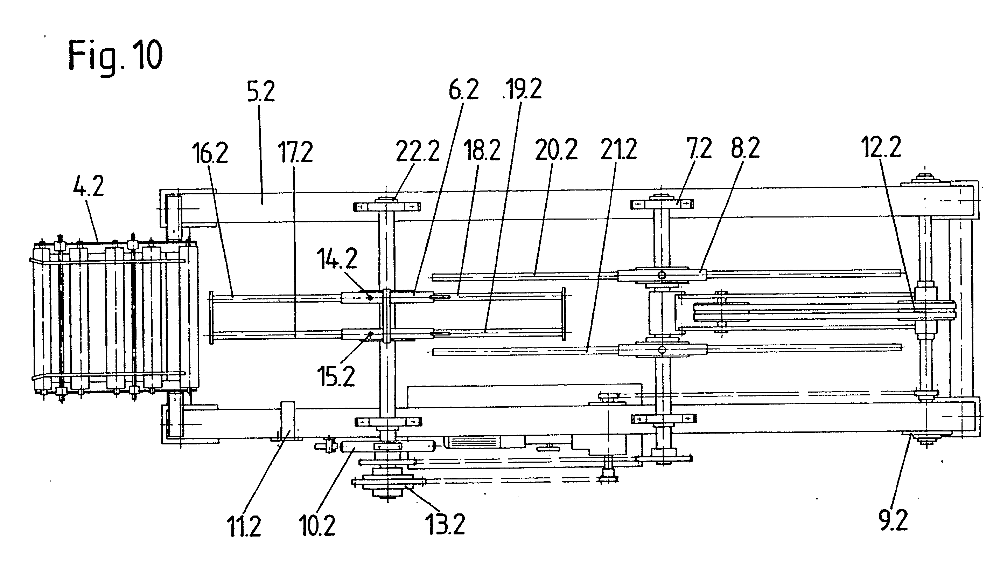

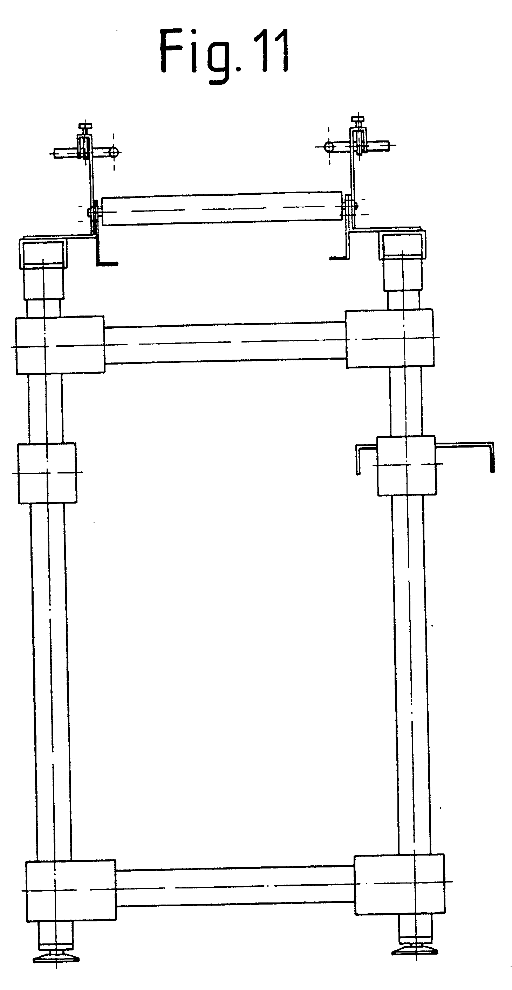

Wie aus den Figuren 9, 10 und 11 ersichtlich ist, sind mehrere, drehbar gelagerte und synchron zueinander betätigbare, als Wendekreuze ausgebildete Wenderäder 6.2 und 8.2 hintereinander auf einem Gerüst 5.2, jeweils von einem Stehlager 7.2 gehalten, angeordnet, wobei jeder Schenkel eines Kreuzes aus mehreren, parallel zueinander liegenden Zinken 16.2, 17.2, bzw. 18.2, 19.2, bzw. 20.2 und 21.2 einer Wendegabel gebildet ist.

Die Zinken von zwei hintereinanderliegenden und zusammenwirkenden Wendekreuzen 6.2 und 8.2 weisen untereinander einen solchen Abstand auf, daß sich ihre Gabelebenen berührunsfrei durchdringen.

Jede Wendegabel 6.2 und 8.2 weist eine Nabe mit Mitnehmern 14.2 und 15.2 zum Wenden eines Behälters oder Kastens um 180° auf.

Das Wenderad 6.2, welches seinerseits mit dem Wenderad 8.2 antriebsmäßig verbunden ist, wird von dem Motor 3.2 angetrieben. Zwischen dem Motor 3.2 und der Welle des Wenderades 6.2 ist eine Rutschkupplung, 13.2 angeordnet. Die Steuerung des Wenderades 6.2 und damit auch des folgenden Wenderades 8.2 erfolgt mit Hilfe eines Näherungsschalters 2.2 und einer Lichtschranke 11.2.

Die Welle des Wenderades 6.2 weist ein Schaltrad 10.2 mit Schaltnocken auf.

Vor und hinter den Wenderädern 6.2 und 8.2 befindet sich je eine Transportvorrichtung 4.2 bzw. ein Kastenauslauf-Transporteur 12.2, wobei die Transportvorrichtung 4.2 als Einlauf-Rollenbahn ausgebildet ist.

Der Kastenauslauf-Transporteur 12.2 weist eine Welle auf, welche in einem Flanschlager 9.2 gelagert ist. Behälter-Gleitschienen 22.2 und Behälterführungsschienen sorgen dafür, daß die zu wendenden Kästen in der Einlaufbahn eine gleichbleibende Position einnehmen.

Zwischen den Wenderädern 6.2 und 8.2 unterhalb derselben befindet sich ein nicht näher dargestellter Abfall-Auffangbehälter.

Ein über die Einlauf-Rollenbahn 4.2 einlaufender Kasten wird nach Freigabe durch die Einlauflichtschranke 11.2 von den Zinken 16.2 und 17.2 des Wenderades 6.2 erfaßt und um 180° gewendet. Hierbei schlägt der Kasten nach Überschreiten eines Winkels von mehr als 90° auf die Zinken 18.2 und 19.2 auf, wobei er durch die Mitnehmer 14.2 bzw. 15.2 daran gehindert wird, von der Achse des Wenderades 6.2 wegzurutschen. Durch den Aufschlag fallen noch in dem Kasten befindliche Teile, beispielsweise Glasscherben, heraus.

Unmittelbar danach wird der Kasten von den Zinken 20.2 und 21.2 des folgenden Wenderades 8.2 erfaßt und erneut um 180° gewendet, so daß er danach seine ursprüngliche Normalstellung wieder einnimmt.

In dieser Position wird der Kasten von dem Kastenauslauf-Transporteur 12.2 erfaßt und einer weiteren Transportvorrichtung zugeführt. Über eine Schiefe Ebene oder dergleichen gelangt der Kasten sodann in die Wasch- und Transportvorrichtung.

Das Kanalsystem besteht vorteilhaft aus glasfaserverstärktem Kunststoff. Die Anlage ist mit derartigen Materialien nahezu wartungsfrei und arbeitet mit einem geräuscharmen Transport, wobei als Nebenleistung ein vorteilhafter Einweich- oder Waschvorgang erreicht wird, für den Waschanlagen einer Länge erforderlich wären, für die in den meisten Unternehmen kein ausreichender Platz zur Verfügung steht.

EP 0 159 625 B1

Bezugszeichenliste

| 1 | U-förmiger Kanal | 10.2 | Schaltrad |
|---|---|---|---|
| 1.1 | Transportvorrichtung | 11 | Nachspülstation |
| 2 | geschlossener Kanal | 11.1 | Flaschenkästen |
| 2.1 | zylinderförmiger Kanal | 11.2 | Lichtschranke |
| | | 12 | Flüssigkeitspumpe |
| 2.2 | Näherungsschalter | 12.1 | Behälterlaufschienen |
| 3 | Einlaufbecken | 12.2 | Kastenauslauftransporteur |
| 3.1 | U-förmiges Gestell | 13 | Flüssigkeits-Rückspülrohr |
| 3.2 | Motor | 13.1 | Flüssigkeits-Rückführungssystem |
| 4 | Eingangsstation | | system |
| 4.1 | Querstrebe | 13.2 | Rutschkupplung |
| 4.2 | Transportvorrichtung | 14 | Flanschelement |
| 5 | Einlaufrutsche | 14.1 | Flüssigkeits-Rückführungssystem |
| 5.1 | verstellbare Füße | | system |
| 5.2 | Gerüst | 14.2 | Nabe mit Mitnehmer |
| 6.1 | Flüssigkeits-Rückflußkanal | 15 | Kanalwände |
| | flußkanal | 15.2 | Nabe mit Mitnehmer |
| 6.2 | Wenderäder | 16 | Gestell, U-förmig |
| 7 | Transportkanal | 16.2 | Zinken |
| 7.1 | Kanal, Rohr | 17 | Bodenteil |
| 7.2 | Stehlager | 17.2 | Zinken |
| 8 | Auslaufbecken | 18 | Kanalabschnitt |
| 8.1 | oberes Rohrteil | 18.2 | Zinken |
| 8.2 | Wenderäder | 19 | Behälterlaufschienen |
| 9 | Rutsche | 19.2 | Zinken |
| 9.1 | Halteringe | 20 | Behälterführungsschienen |
| 9.2 | Flanschlager | 20.2 | Wendegabel |
| 10 | Auslaufdeckelführung | 21 | Behälterausgangsstation |
| 10.1 | Flüssigkeits-Rückführungskanal | 21.2 | Wendegabel |
| | führungskanal | 22.2 | Behältergleitschienen |

**Ansprüche**

1. Vorrichtung zum Transport von Behältern, Gefäßen, Kästen oder dergleichen, insbesondere Flaschenkästen (11.1), in Form eines mit einer Flüssigkeit gefüllten Kanalsystems (1, 1.1, 2) **dadurch**

7

gekennzeichnet, daß die Flüssigkeit gleichzeitig Waschmittel und Transportmittel ist und mittels einer Umwälzpumpe (12) in einem geschlossenen, einen integrierten Flüssigkeits-Rückflußkanal (6.1 10.1, 13, 13.1,14.1) aufweisenden Flüssigkeitskreislauf des Kanalsystems (1, 1.1, 2) umwälzbar ist, wobei das Kanalsystem (1, 1.1, 2) - im Querschnitt betrachtet - kreis- oder U-förmig ausgebildet ist und im Baukastensystem gerade-, links- und/oder rechtsgebogene Kanalabschnitte (18) aufweist.

2. Vorrichtung nach Ansprüche 1, **dadurch gekennzeichnet, daß** der mit dem Kanalsystem (1, 1.1, 2) integrierte FlüssigkeitsRückflußkanal (6.1, 10.1, 13, 13.1,14.1) außerhalb und/oder innerhalb des Kanalsystems (1, 1.1, 2) angeordnet ist.

3. Vorrichtung nach Ansprüche 1 oder 2, **dadurch gekennzeichnet, daß** der Flüssigkeits-Rückflußkanal in mehrere Kanäle (13.1, 14.1) unterteilt ist.

4. Vorrichtung nach Ansprüche 1. 2 oder 3, **dadurch gekennzeichnet, daß** das Kanalsystem (1, 1.1, 2) in seinem Innern Behälter-Gleit-und Führungsschienen (19, 20) aufweist.

5. Vorrichtung nach Ansprüche 1 oder einem der voranstehenden Ansprüche, **dadurch gekennzeichnet, daß** die Wand- und Rohrelemente (7.1, 15) der Kanalabschnitte an ihren Außenseiten eine thermische Isolierung aufweisen.

6. Vorrichtung nach Ansprüche 1 oder einem der voranstehenden Ansprüche, **dadurch gekennzeichnet, daß** mehrere Kanalsysteme miteinander integriert und nebeneinander angeordnet sind

7. Vorrichtung nach Ansprüche 1 oder einem der voranstehenden Ansprüche, **dadurch gekennzeichnet, daß** in dem zylinderförmig ausgebildeten Kanalsystem (2.1) austauschbare, verstell- und justierbare Strömungsleit- und -Führungsbleche angeordnet sind, um die Strömungsgeschwindigkeit zu regulieren und die Wirbelbildung zu verhindern oder zu vermindern.

8. Vorrichtung nach Ansprüche 1 oder einem der voranstehenden Ansprüche, **dadurch gekennzeichnet, daß** mindestens ein Kanalabschnitt (1, 2, 7.1) in den Kanalwandungen Sprühdüsen aufweist.

9. Vorrichtung nach Ansprüche 1 oder einem der voranstehenden Ansprüche, **dadurch gekennzeichnet, daß** das Kanalsystem (6.1, 10.1, 13, 13.1,14.1) aus glasfaserverstärktem Kunststoff besteht.

10. Vorrichtung nach Ansprüche 1 oder einem der voranstehenden Ansprüche, **dadurch gekennzeichnet, daß** die Behältereingangsstation (4) eine zum Boden des ersten Kanalabschnittes führende, mit Öffnungen ausgerüstete Rutsche aufweist, welche auf ihrer Unterseite von der Flüssigkeit in Transportrichtung anströmbar ist.

11. Vorrichtung nach Ansprüche 1 oder einem der voranstehenden Ansprüche, **dadurch gekennzeichnet, daß** die Behälterausgangsstation (21) eine in eine Wasch- und/oder Nachspülstation (11) führende Rutsche (9) aufweist, welche mit räumlich verteilten Düsen ausgerüstet ist, wobei unter der Boden- bzw. Behälterführungsfläche ein Schmutzaustrageband mit Filtervorrichtung vorhanden ist.

12. Vorrichtung nach Ansprüche 1 oder einem der voranstehenden Ansprüche, **dadurch gekennzeichnet, daß** als Eingangsstation (4) zum Kanalsystem eine mehrstufige Behälter- oder Kastenwendevorrichtung angeordnet ist.

13. Vorrichtung nach Ansprüche 1 oder einem der voranstehenden Ansprüche, **dadurch gekennzeichnet, daß** mehrere, drehbar gelagerte und synchron zueinander betätigbare, als Wendekreuze ausgebildete Wenderäder (6.2, 8.2) hintereinander angeordnet sind, wobei jeder Schenkel eines Kreuzes aus mehreren, parallel zueinander liegenden Zinken (17.2, 18.2) einer Wendegabel (20.2) gebildet ist und die Zinken von zwei hintereinanderliegenden und zusammenwirkenden Wendekreuze (6.2, 8.2) untereinander einen solchen Abstand aufweisen, daß sich ihre Gabelebenen berührungsfrei durchdringen.

**Claims**

1. Means for transporting containers, vessels, boxes and the like, in particular crates (11.1), having the form of a liquid-filled channel system (1, 1.1, 2), characterized in that the liquid is a detergent and a transport medium at the same time and that it can be circulated by means of a circulating pump (12) in a closed liquid circuit of the channel system (1, 1.1, 2), said liquid circuit having an integrated liquid return channel (6.1, 10.1, 13, 13.1, 14.1) and said channel system (1, 1.1, 2) having a circular or U-shaped cross-section and modular straight, left and/or right bent channel sections (18).

2. Means according to Claim 1, characterized in that the liquid return channel (6.1, 10.1, 13, 13.1, 14.1) integrated in the channel system (1, 1.1, 2) is arranged externally and/or internally of the channel system.

3. Means according to Claim 1 or 2, characterized in that the liquid return channel is divided into several channels (13.1, 14.1).

4. Means according to Claims 1, 2 or 3, characterized in that the interior of the channel system (1, 1.1, 2) comprises container sliding and guiding rails (19, 20).

5. Means according to Claim 1 or one of the preceding claims, characterized in that the wall and tube elements (7.1, 15) of the channel sections are externally provided with thermal insulation.

6. Means according to Claim 1 or one of the preceding claims, characterized in that several channel systems are integrated with one another and arranged next to each other.

7. Means according to Claim 1 or one of the preceding claims, characterized in that the cylinder-shaped channel system (2.1) comprises replaceable, variable and adjustable flow controlling and guiding sheets for controlling the flow rate and for preventing or reducing any vortex formation.

8. Means according to Claim 1 or one of the preceding claims, characterized in that at least one channel section (1, 2, 7.1) has spray nozzles provided in the channel walls thereof.

9. Means according to Claim 1 or one of the preceding claims, characterized in that the channel system (6.1, 10.1, 13, 13.1, 14.1) consists of fibre-glass reinforced plastics.

10. Means according to Claim 1 or one of the preceding claims, characterized in that the container entrance station (4) has a chute leading to the floor portion of the first channel section and having openings provided therein, said chutes being arranged such that the liquid can flow against it at its bottom side in transport direction.

11. Means according to Claim 1 or one of the preceding claims, characterized in that the container exit station (21) has a chute (9) leading to a wash and/or flush station (11), said chute being equipped with spatially distributed nozzles, with a dirt removal conveyor with filter means being provided below the floor or container guiding area.

12. Means according to Claim 1 or one of the preceding claims, characterized in that a multi-stage container or crate turning device is provided as the entrance station (4) to the channel system.

13. Means according to Claim 1 or one of the preceding claims, characterized in that several pivotable turning wheels (6.2, 8.2), which are formed as turning crosses and which can be actuated synchronically to each other, are successively arranged, each arm of a cross being formed of several parallel prongs (17.2, 18.2) of a turning fork (20.2), with the prongs of two successive and interactive turning crosses (6.2, 8.2) being spaced from each other such that their fork planes penetrate each other without making any contact.

**Revendications**

1. Dispositif de transport de réceptacles, récipients, caisses ou analogues, en particulier, de casiers à bouteilles (11.1) sous la forme d'un système de canal (1, 1.1, 2) rempli d'un liquide, caractérisé en ce que le liquide est à la fois agent de lavage et agent de transport, et peut être mis en circulation à l'aide d'une pompe de circulation (12) dans un circuit fermé du système de canal (1, 1.1, 2) comportant un canal intégré de retour du liquide (6.1, 10.1, 13, 13.1, 14.1), le système de canal (1, 1.1, 2) étant conformé, en coupe, en cercle ou en U et présentant des sections droites, courbées vers la gauche et/ou courbées vers la droite, qui s'adaptent selon un système d'assemblage modulaire.

2. Dispositif selon la revendication 1, caractérisé en ce que le canal de retour du liquide (6.1, 10.1, 13, 13.1, 14.1) intégré au système de canal (1, 1.1, 2) est agencé à l'extérieur et/ou à l'intérieur du système de canal (1, 1.1, 2).

3. Dispositif selon la revendication 1 ou 2, caractérisé en ce que le canal de retour du liquide est subdivisé en plusieurs canaux (13.1, 14.1).

4. Dispositif selon la revendication 1, 2 ou 3, caractérisé en ce que le système de canal (1, 1.1, 2) présente dans sa partie intérieure des glissières de guidage de réceptacles (19, 20).

5. Dispositif selon la revendication 1 ou l'une des revendications qui précèdent, caractérisé en ce que les éléments de paroi et de tube (7.1, 15) des sections de canal présentent à l'extérieur une isolation thermique.

6. Dispositif selon la revendication 1 ou l'une des revendications qui précèdent, caractérisé en ce que plusieurs systèmes de canaux sont intégrés les uns aux autres et sont agencés l'un à côté de l'autre.

7. Dispositif selon la revendication 1 ou l'une des revendications qui précèdent, caractérisé en ce que, dans le système de canal (2.1) de forme cylindrique, sont agencées des tôles de guidage échangeables, réglables et ajustables pour régler la vitesse d'écoulement et empêcher ou réduire la formation de tourbillons.

8. Dispositif selon la revendication 1 ou l'une des revendications qui précèdent, caractérisé en ce qu'au moins une section de canal (1, 2, 7.1) présente des ajutages de pulvérisation dans ses parois.

9. Dispositif selon la revendication 1 ou l'une des revendications qui précèdent, caractérisé en ce que le système de canal (6.1, 10.1, 13, 13.1, 14.1) est constitué de matière synthétique renforcée par de la fibre de verre.

10. Dispositif selon la revendication 1 ou l'une des revendications qui précèdent, caractérisé en ce que le poste d'entrée des réceptacles (4) présente un plan incliné percé d'ouvertures et menant dans la partie inférieure de la première section de canal, ce plan incliné étant frappé sur sa face inférieure par le liquide dans la direction de transport.

11. Dispositif selon la revendication 1 ou l'une des revendications qui précèdent, caractérisé en ce que le poste de sortie des réceptacles (21) présente un plan incliné (9) menant à un poste de lavage et/ou de rinçage (11), ce plan incliné étant équipé d'ajutages répartis dans l'espace, une bande d'évacuation de la boue dotée d'un dispositif de filtrage étant prévue sous la surface inférieure, respectivement sous la surface de guidage des réceptacles.

12. Dispositif selon la revendication 1 ou l'une des revendications qui précèdent, caractérisé en ce qu'un dispositif de retournement à plusieurs étages pour réceptacles ou casiers est agencé comme poste d'entrée (4) dans le système de canal.

13. Dispositif selon la revendication 1 ou l'une des revendications qui précèdent, caractérisé en ce que plusieurs roues de retournement (6.2, 8.2) conformées en croix, montées à rotation et commandables en synchronisme l'une avec l'autre sont agencées l'une derrière l'autre, chaque branche d'une croix étant constituée de plusieurs dents parallèles l'une à l'autre (17.2, 18.2) d'une fourche de retournement (20.2), et les dents de deux croix de retournement (6.2, 8.2) installées l'une derrière l'autre et collaborant entre elles présentant un écart tel l'une par rapport à l'autre, que les plans dans lesquels se trouvent les fourches s'interpénètrent l'un l'autre sans venir en contact.

## Fig. 3a

## Fig. 4

## Fig. 3b

Einzelheit „X"

## Fig. 3c

Einzelheit „Y"

EP 0 159 625 B1

Fig.1

Schnitt A - B

EP 0 159 625 B1

Fig. 2

# Fig. 5

EP 0 159 625 B1

# Fig. 6

# Fig. 7

# Fig. 8

Fig. 9

Fig. 10

# Fig. 11